# EUROPÄISCHE PATENTSCHRIFT

(11) **EP 3 061 890 B1**
(45) Veröffentlichungstag und Bekanntmachung des Hinweises auf die Patenterteilung: **20.09.2017**
(21) Anmeldenummer: 15156782.3
(22) Anmeldetag: 26.02.2015
(51) Int. Cl.: E04G 15/06, F16L 5/12, F16L 5/14, H02G 3/22

(54) **Durchführung zum Vergießen mit Beton**
Feed-through for casting with concrete
Passage avec du béton

(43) Veröffentlichungstag der Anmeldung: 31.08.2016
(73) Patentinhaber: Hauff-Technik GmbH & Co. KG, 89568 Hermaringen (DE)
(72) Erfinder: Kurz, Ralf, 89537 Giengen (DE)
(74) Vertreter: König Szynka Tilmann von Renesse Patentanwälte Partnerschaft mbB

(56) Entgegenhaltungen:
- EP-A1- 0 246 219
- EP-A1- 0 757 142
- DE-U1-202005 001 153
- US-A- 3 731 448

## Beschreibung

Die vorliegende Erfindung betrifft eine Durchführung zum Einbau in ein Wand- oder Bodenelement durch Vergießen mit Beton in einer Schalung und zum anschließend Montieren mehrerer Leitungen.

Sollen gegenwärtig durch ein aus Beton gegossenes Wand- oder Bodenelement mehrere Leitungen hindurchgeführt werden, wird beim Gießen des Wand- oder Bodenelements ein Rohrstück in der Schalung montiert, welches eine Durchgangsöffnung zwischen den zwei entgegengesetzten Seiten des Wand- oder Bodenelements freihält. Nach dem Härten des Betons und dem Entfernen der Schalung können dann die Leitungen durch das Rohrstück verlegt und so von der einen Seite des Wand- oder Bodenelements zur entgegengesetzten geführt werden. Die Abdichtung erfolgt dann mit einer sogenannten Pressdichtung, welche einen Elastomerkörper mit einer der Anzahl an Leitungen entsprechenden Anzahl an Durchlassöffnungen sowie an beiden Stirnseiten des Elastomerkörpers angeordnete Pressplatten aufweist. Mit Hilfe der Pressplatten kann der Elastomerkörper in Leitungsrichtung komprimiert werden und expandiert infolgedessen senkrecht dazu, legt sich also dichtend an die Leitungen (die Leitungsaußenflächen) und die Innenwand des einbetonierten Rohrstücks an.

Die EP 0 757 142 A1 betrifft eine Durchführung zum Hindurchführen einer Mehrzahl Installationsleitungen, wobei die Durchführung einen Wanddurchbruch in eine Mehrzahl Durchgangsöffnungen untergliedert. Durch jede der Durchgangsöffnungen kann dann eine der Installationsleitungen geführt werden.

Die US 3,731,448 A betrifft eine Durchführung zum Einbetonieren. Dabei ist die Durchführung stirnseitig mit Formschlusselementen versehen und kann sie mit weiteren Durchführungen modulartig zusammengebaut werden.

Die EP 0 246 219 A1 betrifft eine Durchführung, die aus einem Flansch mit Rohrteil und einem Futterrohr zusammengesetzt und dann einbetoniert wird.

Die DE 20 2005 001 153 U1 betrifft eine Kupplungseinrichtung für Schlauch- und Rohrleitungen, die an einer Steckerplatte zusammengesteckt werden können.

Der vorliegenden Erfindung liegt die Aufgabe zugrunde, eine Durchführung zum Einbau in ein Wand- oder Bodenelement durch Vergießen mit Beton anzugeben, welche verbesserte Gebrauchseigenschaften zeigt.

Erfindungsgemäß löst diese Aufgabe eine Durchführung gemäß Anspruch 1.

Bevorzugte Ausführungsformen finden sich in den abhängigen Ansprüchen und der gesamten Offenbarung, wobei in der Darstellung nicht immer im Einzelnen zwischen Vorrichtungs- und Verfahrens- bzw. Verwendungsaspekten unterschieden wird. Jedenfalls implizit ist die Offenbarung hinsichtlich sämtlicher Anspruchskategorien zu lesen, sollen also bspw. bei der Beschreibung der Durchführung angeführte Zweckangaben ausdrücklich auch hinsichtlich entsprechender Verwendungen der Durchführungen offenbart sein.

Die Erfindung richtet sich also auf eine Durchführung für mehrere Leitungen, bspw. mindestens 5, 10, 15, 20 bzw. 25 Leitungen (in der Reihenfolge der Nennung zunehmend bevorzugt); mögliche Obergrenzen können bspw. bei höchstens 200, 150, 100 bzw. 50 Leitungen liegen. Je mehr Leitungen hindurchgeführt werden, desto mühsamer wird die eingangs beschriebene Abdichtung mittels der Pressdichtung, weil bspw. eine entsprechende Anzahl Leitungen durch eine jeweilige Durchlassöffnung im Elastomerkörper hindurchgefädelt werden muss oder, im Falle eines geschlitzten und zum Einlegen der Leitungen aufklappbaren Elastomerkörpers, dieser aufgrund der Vielzahl Durchlassöffnungen und damit Schlitze sehr instabil wird. Mitunter können für die Montage dann sogar auch zwei Monteure erforderlich sein, wovon einer die Pressdichtung hält und der andere die Leitungen einlegt bzw. hindurchfädelt.

Demgegenüber besteht der vorliegende Ansatz nun darin, eigentlich für den Aufbau einer längeren Leitung aus Leitungsteilstücken genutzte Doppelkupplungsstücke in die Durchführung zu integrieren. Nach dem Vergießen der Durchführung mit Beton sind die Doppelkupplungsstücke dann gemeinsam mit der Durchführung in das Wand- oder Bodenelement eingebaut. Soll dann eine Leitung "hindurchgeführt" werden, wird von der einen Seite des Wand- oder Bodenelements her ein Leitungsstück mit seinem Leitungsende an dem Doppelkupplungsstück montiert und wird auch von der entgegengesetzten Seite des Wand- oder Bodenelements her ein Leitungsstück mit seinem Leitungsende an demselben Doppelkupplungsstück montiert. Das Doppelkupplungsstück verbindet die beiden Leitungsstücke und die Leitung ist damit funktional hindurchgeführt (durch die Durchführung bzw. das Wand- oder Bodenelement).

Bei einer "Leitung" kann es sich im Allgemeinen bspw. auch um ein Kabel handeln, etwa ein Strom- oder Datenkabel. Erfindungsgemäß ist die Leitung jedoch ein Hohlrohr, welches bspw. selbst medienführend sein kann, bspw. im Falle eines Wasserrohres; andererseits kann das Hohlrohr jedoch auch in seinem Inneren eine weitere Leitung führen, vorzugsweise ein Kabel. Besonders bevorzugt ist das in dem Hohlrohr geführte Kabel ein Glasfaserkabel. Ist die Leitung ein Hohlrohr, wird das Hohlvolumen im Inneren an dem Doppelkupplungsstück bevorzugt nicht unterbrochen (ist es unterbrechungsfrei), sind die beiden von entgegengesetzten Seiten her an dem Doppelkupplungsstück montierten Leitungsenden also im Inneren über das Doppelkupplungsstück druckfluidisch miteinander verbunden. Mit dem Doppelkupplungsstück ist jedoch bevorzugt das Rohrinnere zum Rohräußeren hin gedichtet ist.

Generell meint "Doppelkupplungsstück" ein Teil, welches genau zwei Anschlussstellen zur Verfügung stellt. Vorzugsweise sind die Anschlussstellen je Doppelkupplungsstück typgleich, ist das Doppelkupplungsstück also insoweit symmetrisch aufgebaut (es können bspw. zwei männliche oder zwei weibliche Anschlussstellen vorgesehen sein). Im erfindungsgemäßen Fall des Hohlrohrs als Leitung sind die Anschlussstellen der Doppelkupplungsstücke Fittinge, und zwar Steckfittinge. Bevorzugt weist das Doppelkupplungsstück an seinem einen Ende ein Steckfitting und an seinem entgegengesetzten Ende ein weiteres Steckfitting auf; das eine Leitungsende ist dann von der einen Seite des Wand- oder Bodenelements her in das eine Steckfitting einschiebbar, das andere Leitungsende von der entgegengesetzten Seite her in das andere Steckfitting (am entgegengesetzten Ende desselben Doppelkupplungsstücks).

Als Steckfitting ist ein Steckfitting mit Arretierung vorgesehen, bei welchem die zum Einschieben des Leitungsendes notwendige Kraft also geringer als die zum Ausziehen notwendige Kraft ist. Das Steckfitting hat also vorzugsweise eine Auszugssicherung, bspw. in Form eines in der Einschiebeöffnung angeordneten Rings mit schräg in Einschieberichtung und zur Mittenachse der Leitung hin weisenden Lamellen, die beim Einschieben des Leitungsendes entlang der Leitungsaußenwand gleiten, aufgrund ihrer schrägen Orientierung bei einer Bewegung in entgegengesetzter Richtung jedoch an der Leitungsaußenwand verfangen und ein Ausziehen zumindest erschweren.

Es gibt auch Steckfittinge mit lösbarer Arretierung, wobei der Mechanismus zum Lösen der Arretierung über die Stirnseite des Steckfittings zugänglich ist. Über diese Stirnseite kann bspw. eine Hülse betätigt und zwischen die der Arretierung dienenden Lamellen und die Außenwand der Leitung geschoben werden, sodass letztere wieder ausgezogen werden kann. Der Einsatz solcher Steckfittinge mit lösbarer Arretierung kann auch vorliegend bevorzugt sein, wobei dann weiter bevorzugt in der Frontplatte ein Zugang zu der lösbaren Arretierung berücksichtigt wird. Dieser Zugang kann im Allgemeinen auch über einen gesonderten Kanal erfolgen, ist jedoch bevorzugt in dem Kanal mit dem Doppelkupplungsstück berücksichtigt.

Bevorzugt werden die zwei Enden einer Leitung an dem jeweiligen Doppelkupplungsstück richtungsänderungsfrei miteinander verbunden, macht das Doppelkupplungsstück also bspw. keinen Knick. Bevorzugt sind also jeweils für sich gerade Doppelkupplungsstücke; diese sind vorzugsweise derart in der Frontplatte angeordnet, dass jeweils die Mittenachse der jeweiligen Leitung senkrecht auf einer zur Anlage an der Schalung vorgesehenen Anlagefläche der Frontplatte steht; ein jeweiliges Doppelkupplungsstück ist also bevorzugt derart orientiert, dass die Mittenachse der jeweiligen Leitung senkrecht auf den Seitenflächen des Wand- oder Bodenelements steht. (Im Folgenden wird der Einfachheit halber nur noch von "Wandelement" gesprochen; gleichwohl ist die Offenbarung auf ein Wand- oder Bodenelement zu lesen.)

Mit der für sich einstückigen Frontplatte werden die Doppelkupplungsstücke bei der Montage der Durchführung, insbesondere beim Vergießen mit Beton, vorteilhafterweise beisammen gehalten und auch Stück weit geschützt. Die Mehrzahl Doppelkupplungsstücke können so vergleichsweise einfach gemeinsam gehandhabt und in das Wandelement eingebaut werden. Es muss bspw. lediglich die Frontplatte an der Schalung befestigt werden, etwa damit vernagelt bzw. verschraubt, womit zugleich die Position der Doppelkupplungsstücke in Bezug auf das dann hergestellte Wandelement festgelegt ist. Die Doppelkupplungsstücke sind in der Frontplatte gehalten und dabei zugleich dagegen gedichtet; die Frontplatte umschließt die Doppelkupplungsstücke also jeweils dichtend. Generell wird das Wandelement im Zuge des "Einbaus" der Durchführung bevorzugt auch erst selbst hergestellt, wird also das Wandelement gegossen und dabei zugleich die Durchführung eingebaut.

Die Frontplatte ist "einstückig", kann also nicht zerstörungsfrei in Einzelteile zerlegt werden. Im Allgemeinen kann es sich dabei bspw. auch um ein Mehrkomponenten-Spritzgussteil handeln; es kann bspw. ein steiferes Kunststoffmaterial ein Anlageteil zur Anlage an der Schalung bilden und ein demgegenüber weicheres Kunststoffteil die Kanäle zur Verfügung stellen. Vorzugsweise ist die für sich einstückige Frontplatte monolithisch, ist sie also in ihrem Inneren frei von Materialgrenzen zwischen unterschiedlichen Materialien oder Materialien unterschiedlicher Herstellungsgeschichte. Vorzugsweise ist die Frontplatte ein Formteil, das also in seiner Gestalt von einem Formwerkzeug freigegeben wird (was eine mechanische Nachbearbeitung im Allgemeinen aber nicht ausschließen soll, z. B. ein Entgraten).

Vorzugsweise weist die Frontplatte an ihrer zur Anlage an der Schalung vorgesehenen Seite einen (in Bezug auf die Flächenrichtungen der Anlagefläche) nach außen gegenüber dem Teil der Frontplatte mit den Doppelkupplungsstücken überstehenden Flansch auf, der zur Befestigung an der Schalung dient. Die Frontplatte kann also über den Flansch an der Schalung befestigt werden, etwa damit vernagelt bzw. verschraubt. Bevorzugt ist ein vollständig umlaufender Flansch. Weiter bevorzugt ist an der zur Anlage an der Schalung vorgesehenen Seite des Flansches eine umlaufende Erhebung vorgesehen, die dann an der Schalung einer entsprechend umlaufende Anlage findet, bevorzugt eine näherungsweise linienförmige Anlage. Wird der Flansch an der Schalung befestigt, wird diese Erhebung mit etwas erhöhtem Druck angepresst, was einem unerwünschten Eintritt von Beton vorbeugen helfen kann.

In bevorzugter Ausgestaltung sind die Frontplatte und die Doppelkupplungsstücke mehrstückig zueinander, vorzugsweise sind die Doppelkupplungsstücke jeweils in ihren jeweiligen Kanal eingeschoben. Im Allgemeinen wäre indes bspw. auch eine einstückige Ausgestaltung denkbar, also eine direkt an die Doppelkupplungsstücke als Einlegeteile angeformte Frontplatte. Bei der bevorzugten Mehrstückigkeit ist sowohl die Frontplatte zu jedem der Doppelkupplungsstücke mehrstückig und sind diese auch untereinander mehrstückig.

Wenngleich im Allgemeinen bspw. auch eine Schraubverbindung zwischen Doppelkupplungsstück (mit Außengewinde) und jeweiligem Kanal (mit Innengewinde) denkbar ist, ist eine Ausgestaltung derart bevorzugt, dass jedes der Doppelkupplungsstücke in den jeweiligen Kanal mit einer ausschließlich parallel zur Mittenachse der Leitung orientierten Einschiebebewegung einschiebbar ist. Dies soll natürlich nicht ausschließen, dass das Doppelkupplungsstück beim Einschieben bspw. zusätzlich hin- und hergedreht wird; eine Drehbewegung soll aber nicht erforderlich, sondern die zur Mittenachse parallele Bewegung ausreichend sein.

Die Doppelkupplungsstücke sind vorzugsweise von einer der zur Anlage an der Schalung vorgesehenen Seite entgegengesetzten Seite her eingeschoben; die Einschiebbarkeit ist vorzugsweise durch einen jeweiligen Anschlag begrenzt, welcher das jeweilige Doppelkupplungsstück von der zur Anlage an der Schalung vorgesehenen Anlagefläche der Frontplatte beabstandet hält.

Bevorzugt sind die Doppelkupplungsstücke also in ihren jeweiligen Kanal eingeschoben, weiter bevorzugt sind sie dann jeweils mit einer Hinterschneidung darin gehalten. Es kann also bspw. eine Außenfläche des Doppelkupplungsstücks konturiert sein und der Kanal diese Kontur berücksichtigend mit variablem Durchmesser geformt sein; vorzugsweise ist die Kanalinnenwand zumindest abschnittweise komplementär zur Doppelkupplungsstückaußenwand geformt und liegen die beiden flächig aneinander an. Generell soll die "Hinterschneidung" in Bezug auf zur Mittenachse der Leitung parallele Richtungen bestehen, was einem unbeabsichtigten Ausziehen des Doppelkupplungsstücks aus dem jeweiligen Kanal vorbeugen hilft.

In bevorzugter Ausgestaltung sind die Kanäle jeweils mit einem einstückig, vorzugsweise monolithisch, mit der übrigen Frontplatte ausgebildeten Verschlussdeckel verschlossen, welcher das jeweilige Doppelkupplungsstück zu der zur Anlage an der Schalung vorgesehenen Seite der Frontplatte hin abdeckt. Soll an einem jeweiligen Doppelkupplungsstück dann das durch die Frontplatte montierte Leitungsende angebracht werden, muss zunächst der Verschlussdeckel entfernt werden. Bevorzugt verschließen die Verschlussdeckel ihren jeweiligen Kanal wasserdicht, hindern sie also nicht nur einen Eintrag grober Verschmutzung, sondern auch von Feuchtigkeit. Dies ermöglicht auch eine Nachbelegung der Doppelkupplungsstücke bzw. deren Blindvorverlegung.

Die Verschlussdeckel sind vorzugsweise jeweils mit einer Materialbrücke verringerter Dicke mit der übrigen Frontplatte verbunden, was das Herauslösen des jeweiligen Verschlussdeckels vereinfacht. Eine Belegung bzw. Nachbelegung ist auf einfache Weise möglich, auch einzelner Leitungen; es muss bzw. müssen dann lediglich der bzw. die entsprechende(n) Blindverschluss bzw. Blindverschlüsse herausgetrennt und das Leitungsende montiert werden. Im Gegensatz dazu ist bei der eingangs genannten Pressdichtung für eine Nachbelegung zumindest eine aufwändige Demontage der Pressdichtung erforderlich (soweit sie überhaupt möglich ist).

In bevorzugter Ausgestaltung ist an einem jeweiligen Verschlussdeckel, und zwar an der dem jeweiligen Doppelkupplungsstück entgegengesetzten Seite davon, ein sich vom übrigen Verschlussdeckel weg erhebender Greifabschnitt vorgesehen; der Greifabschnitt ist einstückig mit dem übrigen Verschlussdeckel, vorzugsweise monolithisch damit. Der Greifabschnitt erhebt sich also bspw. steg- bzw. lamellenförmig von dem übrigen Verschlussdeckel weg und kann bspw. mit der Hand oder jedenfalls mit einer Zange gut gegriffen werden. Wenngleich der Verschlussdeckel im Allgemeinen auch ohne Greifabschnitt gelöst werden kann, bspw. indem er ein Stück weit nach innen, also in Richtung des jeweiligen Doppelkupplungsstücks, gedrückt wird, kann der Greifabschnitt das Herauslösen vereinfachen. Zudem kann so die Gefahr einer Beschädigung des Doppelkupplungsstücks vorgebeugt werden, welche sich bei dem eben beschriebenen Eindrücken des Verschlussdeckels ergeben kann.

In bevorzugter Ausgestaltung erstrecken sich die Kanäle jeweils über die Doppelkupplungsstücke hinaus, hat also jeder Kanal einen Doppelkupplungsstück-freien Abschnitt zwischen dem jeweiligen Doppelkupplungsstück und der zur Anlage an der Schalung vorgesehenen Seite der Frontplatte. In anderen Worten sind die Doppelkupplungsstücke zu der eben genannten Seite der Frontplatte ein Stück weit beabstandet, bspw. um mindestens 1 cm, 2 cm, 3 cm, 4 cm bzw. 5 cm (in der Reihenfolge der Nennung zunehmend bevorzugt); mögliche Obergrenzen können in Abhängigkeit von der Wanddicke bspw. bei höchstens 50 cm, 40 cm, 30 cm, 20 cm bzw. 15 cm liegen. In dem Wandelement sind die Doppelkupplungsstücke dann entsprechend zu der Wandelementseitenfläche mit der Frontplatte beabstandet, sind die Doppelkupplungsstücke also insoweit (bezogen auf Richtungen senkrecht zur Wandseitenfläche) innerhalb des Wandelements angeordnet. Durch eine entsprechende Anordnung können die Doppelkupplungsstücke bspw. vor einer mechanischen Beschädigung besser geschützt sein.

Wenngleich die eben genannten Verschlussdeckel im Allgemeinen auch direkt an die Schalung grenzen, also in der Ebene der Seitenfläche des Wandelements liegen können, sind sie bevorzugt ein Stück weit nach innen versetzt, also jeweils in einem Doppelkupplungsstück-freien Abschnitt des jeweiligen Kanals angeordnet. So können dann bspw. auch die Greifabschnitte innerhalb des jeweiligen Kanals liegen, was die Montage der Frontplatte an der Schalung vereinfachen kann (nach außen steht nichts über).

In bevorzugter Ausgestaltung ist in den Kanälen, also in den jeweiligen Doppelkupplungsstück-freien Abschnitten davon, je Kanal mindestens ein sich von der übrigen Kanalinnenwand nach innen weg erhebender, vorzugsweise vollständig umlaufender (in Bezug auf einen Umlauf um die Mittenachse der Leitung) Steg vorgesehen. Dieser soll etwa im Vergleich zu einer Dichtung eher starr sein, sich also insoweit auch nicht tatsächlich dichtend an die Leitungsaußenwand anlegen, sondern beim Einschieben der Leitung entlang der Leitungsaußenwand streichen und Verschmutzungen entfernen. Dies dient einem Schutz der über die Frontplatte zugänglichen Anschlussstelle des Doppelkupplungsstücks; die Doppelkupplungsstücke dichten die Leitungsenden ja auch gegeneinander, wobei diese Dichtfunktion bei einem Verschmutzungseintrag erheblich beeinträchtigt sein kann.

Bei einer bevorzugten Ausführungsform nimmt in den Doppelkupplungsstück-freien Abschnitten der Kanäle jeweils der Kanaldurchmesser von der zur Anlage an der Schalung vorgesehenen Seite der Durchführung zu dem jeweiligen Doppelkupplungsstück hin ab. Dies bezieht sich auf die Kanalinnenwand im Gesamten, wobei, soweit vorhanden, eben dargestellte Abstreifer außer Betracht bleiben sollen. Die Abnahme muss nicht zwingend über den gesamten Doppelkupplungsstück-freien Abschnitt erfolgen; vorzugsweise nimmt der Kanaldurchmesser im gesamten Bereich zwischen einem Verschlussdeckel (soweit vorhanden) und dem Doppelkupplungsstück ab. Die Kanalinnenwand ist (ggf. von einem Abstreifer abgesehen) vorzugsweise konisch, der Durchmesser nimmt also bevorzugt gleichmäßig ab. Die Ausgestaltung kann bspw. das Heranführen des Leitungsendes an das Doppelkupplungsstück vereinfachen, nämlich eine gewisse Führung zur Verfügung stellen.

Bei einer bevorzugten Ausführungsform ist außenseitig an der Frontplatte, und zwar an einer Außenfläche davon, die sich von der zur Anlage an der Schalung vorgesehenen Seite der Frontplatte zur entgegengesetzten Seite erstreckt, eine Stegdichtung vorgesehen, vorzugsweise vollständig umlaufend (dies bezieht sich hierbei auf einen Umlauf um die Mittenachse der Leitungen). Die Stegdichtung ist zu der für die Anlage an der Schalung vorgesehenen Seite der Frontplatte beabstandet, also nach innen versetzt, liegt also nach dem Einbetonieren innerhalb des Wandelements; der Beton umschließt die Stegdichtung. Bevorzugt sind mehrere solcher Stegdichtungen vorgesehen, etwa mindestens zwei, und bspw. nicht mehr als fünf bzw. vier Stegdichtungen; besonders bevorzugt sind drei Stegdichtungen.

Bei einer bevorzugten Ausführungsform ist zusätzlich zu der ersten Frontplatte eine zweite Frontplatte vorgesehen, welche der ersten Frontplatte entgegengesetzt angeordnet ist. Auch die zweite Frontplatte ist für sich einstückig, vorzugsweise monolithisch; es sind sämtliche vorstehend für die erste Frontplatte beschriebenen bevorzugten Ausgestaltungen auch im Falle der zweiten Frontplatte bevorzugt; besonders bevorzugt sind die beiden Frontplatten baugleich. Auch in der zweiten Frontplatte sind eine Mehrzahl Kanäle vorgesehen, in welchen jeweils eines der Doppelkupplungsstücke gehalten ist. Jedes Doppelkupplungsstück ist dann also mit einem Ende in der ersten Frontplatte gehalten und mit dem entgegengesetzten Ende in der zweiten Frontplatte gehalten, vorzugsweise jeweils eingeschoben.

Die Doppelkupplungsstücke sind so von beiden Seiten her geschützt. Bei der Montage der Durchführung liegt die erste Fronplatte an einem Schalungselement an und die entgegengesetzte zweite Frontplatte an einem dem ersten Schalungselement gegenüberliegenden zweiten Schalungselement. Die Doppelkupplungsstücke sind so gut beisammen gehalten, und die Durchführung kann vergleichsweise einfach gehandhabt und in der Schalung positioniert werden.

Generell ist bevorzugt, dass sich ein jeweiliges Doppelkupplungsstück über mindestens 1/10, vorzugsweise 1/5, weiter bevorzugt 1/3, seiner entlang der Mittenachse der Leitung genommenen Länge innerhalb des Kanals erstreckt. Im Allgemeinen könnte das Doppelkupplungsstück auch vollständig eingeschoben sein, vorzugsweise ist es jedoch höchstens zur Hälfte seiner Länge eingeschoben.

Bei einer bevorzugten Ausführungsform ist an der zur Anlage an der Schalung vorgesehenen Seite der Frontplatte eine Nummerierung zur Kennzeichnung der Doppelkupplungsstücke vorgesehen. Es ist also jedem Doppelkupplungsstück eine Nummer zugeordnet, vorzugsweise ist auch für jedes der Doppelkupplungsstücke eine Nummer an der Fronplatte angebracht (im Allgemeinen könnte bspw. auch nur für jedes zweite eine Nummer aufgebracht sein und könnten sich die jeweilig dazwischen liegenden Nummern implizit ergeben).

In bevorzugter Ausgestaltung ist im Falle der Durchführung mit zwei entgegengesetzten Frontplatten an jeder der beiden Frontplatten dieselbe Nummerierung vorgesehen. Der Hintergrund ist, dass die Frontplatten bevorzugt als baugleiche Formteile ausgeführt sind, was bspw. die Herstellung im selben Formwerkzeug ermöglicht und Kosten verringern hilft. Indem nun die Nummerierung jedoch als eine erste und eine zweite Nummernfolge vorgesehen ist, also jedem Doppelkupplungsstück zwei Nummern zugeordnet sind, können mit den zueinander entgegengesetzt angeordneten Frontplatten den Doppelkupplungsstücken gleichwohl jeweils dieselben Nummern zugeordnet werden. Eine einem Doppelkupplungsstück mit der ersten Nummernfolge der ersten Frontplatte zugeordnete Nummer stimmt also mit der demselben Doppelkupplungsstück mit der zweiten Nummernfolge der zweiten Frontplatte zugeordneten Nummer überein. Dies gilt im Prinzip auch umgekehrt (auch die dem Doppelkupplungsstück mit der zweiten Nummernfolge der ersten Frontplatte zugeordnete Nummer stimmt mit der dem Doppelkupplungsstück mit der ersten Nummernfolge der zweiten Frontplatte zugeordneten Nummer überein), die Nummernfolgen sind jedoch vorzugsweise derart auf die Frontplatte aufgebracht, dass bei der ersten Frontplatte die zweite Nummernfolge auf dem Kopf steht, also die erste Nummernfolge maßgeblich ist, und bei der zweiten Frontplatte die erste Nummernfolge auf dem Kopf steht (und die zweite maßgeblich ist).

Die Erfindung betrifft auch ein Wandelement aus Beton mit einer vorliegend offenbarten Durchführung darin, die also in das Wandelement eingegossen ist, also im Zuge dessen Herstellung eingebaut. Von beiden Seiten des Wandelements aus ist dann je Leitung jeweils ein Leitungsende montierbar. Soweit generell je Leitung von einem Leitungsende, das von der einen Seite montiert wird, und einem Leitungsende, das von der entgegengesetzten Seite her montiert wird, die Rede ist, bezieht sich dies selbstverständlich auf die Enden von Teilstücken der in Rede stehenden Leitung.

Die Erfindung betrifft auch ein Verfahren zum Herstellen einer vorliegend offenbarten Durchführung, wobei für die Herstellung der Frontplatte ein Kunststoffmaterial vorgesehen und in ein Formwerkzeug eingebracht wird. Nach einer zumindest teilweisen Verfestigung, nachdem das Kunststoffmaterial in dem Formwerkzeug also zumindest formstabil geworden ist, wird die Frontplatte entformt. Anschließend werden die Doppelkupplungsstücke in die Kanäle eingebracht, vorzugweise eigeschoben (siehe vorne). Die Kanäle können im Allgemeinen bspw. auch im Zuge einer mechanischen Nachbearbeitung eingebracht werden, etwa geschnitten oder gebohrt, vorzugsweise werden sie jedoch bereits in dem Formwerkzeug berücksichtigt, gibt dieses also die Frontplatte mit Kanälen darin frei.

Im Allgemeinen kann die Frontplatte hierbei auch spritzgegossen werden, etwa aus einem thermoplastischen Elastomer. Bevorzugt wird die Frontplatte jedoch als Pressteil hergestellt, etwa durch Pressen von synthetischem Kautschukmaterial in einer Form und Vulkanisieren des synthetischen Kautschukmaterials in der Form. Der Form wird vorzugsweise bei Raumtemperatur fließfähiges, das heißt mit bestimmter Viskosität flüssiges, synthetisch hergestelltes Kautschukmaterial zugeführt und in der Form gepresst, also etwa einem Druck von 80 bis 120 bar, vorzugsweise 90 bis 110 bar, besonders bevorzugt 95 bis 105 bar, ausgesetzt. Die Temperatur liegt beim Pressen über der Raumtemperatur, insbesondere über 170° C, vorzugsweise über 180° C, und besonders bevorzugt über 190° C. Als Maximaltemperatur werden vorzugsweise 210° C, besonders bevorzugt 200° C, nicht überschritten. Unter diesen Bedingungen kann eine Vernetzung der langkettigen Kautschukmoleküle stattfinden, wodurch das fließfähige Kautschukmaterial in im Wesentlichen elastisches Gummimaterial übergeführt wird. Das synthetische Kautschukmaterial kann dabei beispielsweise Styrol, Butadien, Styrolacrylat, Reinacrylat bzw. Vinylacetat als Bestandteil aufweisen.

Die Erfindung betrifft, wie bereits eingangs erwähnt, auch die Verwendung einer vorliegend offenbarten Durchführung zum Einbau in ein Wandelement durch Vergießen mit Beton in einer Schalung und zum anschließend Montieren mehrerer Leitungen. Es wird nochmals ausdrücklich auf die vorstehende Offenbarung verwiesen. Soweit vorstehend auf die zur Anlage an der Schalung vorgesehene Seite der Frontplatte Bezug genommen wird, ist dies im Falle der montierten Durchführung jene Seite des Wandelements, von welcher aus nach dem Entfernen der Schalung die Frontplatte sichtbar ist.

Im Folgenden wird die Erfindung anhand eines Ausführungsbeispiels näher erläutert. Im Einzelnen zeigt
- Fig. 1: eine geschnittene Seitenansicht einer erfindungsgemäßen, in einer Wand vergossenen Durchführung;
- Fig. 2: die Durchführung gemäß Fig. 1 in einer Schrägansicht vor dem Einbau;
- Fig. 3: eine Frontplatte der Durchführung gemäß den Fig. 1 und 2 in einer geschnittenen Seitenansicht;
- Fig. 4: die Frontplatte gemäß Fig. 3 in einer Aufsicht.

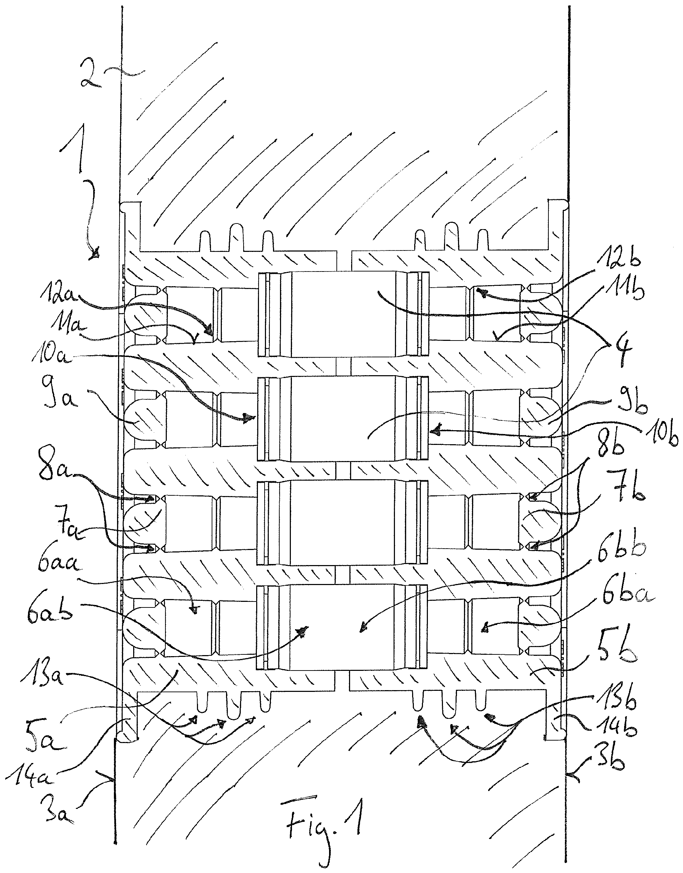

Fig. 1 zeigt eine erfindungsgemäße Durchführung 1 die in eine Wand 2 aus Beton eingegossen ist. Die Durchführung 1 liegt jeweils bündig mit den beiden Seitenflächen 3a, b der Wand 2. Vorliegend ist die Situation nach dem Entschalen, also dem Entfernen der beim Gießen der Wand 2 vorgesehenen Schalung, gezeigt. Vor dem Gießen der Wand 2 begrenzt die Schalung eine Kavität dort, wo nun die Seitenflächen 3a, b der Wand 2 liegen.

Die Durchführung 1 weist 24 Doppelkupplungsstücke 4 in ihrem Inneren auf, die der Übersichtlichkeit halber nicht geschnitten, sondern in Seitenansicht gezeigt sind. Jedes der Doppelkupplungsstücke 4 weist zwei Steckfittinge auf, und zwar an seinen beiden entgegengesetzten Enden jeweils eines. So kann in jedes Doppelkupplungsstück ein Hohlrohrteilstück von der in der Figur linken Seite der Wand 2 und ein Hohlrohrteilstück von der in der Figur rechten Seite der Wand 2 eingeschoben werden. Nach dem Einschieben sind die beiden Hohlrohrteilstücke über das jeweilige Doppelkupplungsstück 4 miteinander verbunden; so kann das Hohlrohr funktional durch die Wand 2 hindurchgeführt werden. In dem Hohlrohr kann dann bspw. ein Glasfaserkabel geführt werden.

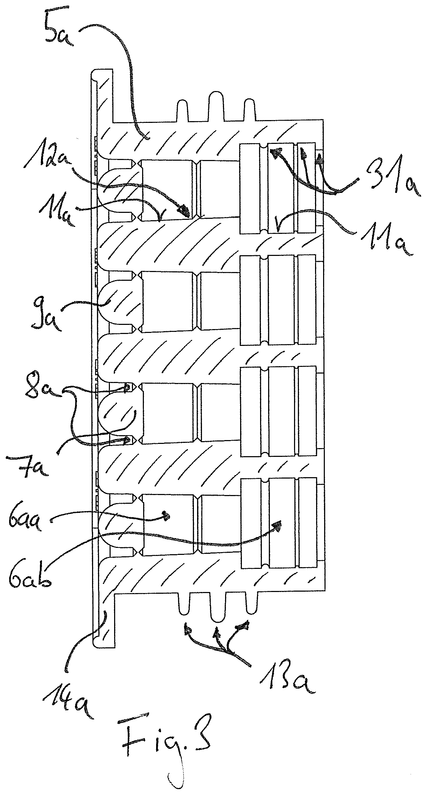

Die Durchführung 1 ist aus einer ersten Fronplatte 5a und einer dazu entgegengesetzt angeordneten zweiten Frontplatte 5b aufgebaut. Jede der Frontplatten 5 weist eine Mehrzahl Kanäle 6 auf (vgl. auch Fig. 3, die eine Frontplatte ohne eingesetzte Doppelkupplungsstücke zeigt). Jeder der Kanäle 6 gliedert sich in einen Abschnitt 6ab, 6bb, in dem das jeweilige Doppelkupplungsstück 4 angeordnet ist, und in einen Doppelkupplungsstück-freien Abschnitt 6aa, 6ba. Die Doppelkupplungsstücke 4 sind jeweils in die Kanäle 6 eingeschoben und darin mit einer Hinterschneidung gehalten (vgl. Fig. 3 und die zugehörige Erläuterung).

In dem in Fig. 1 gezeigten Zustand nach dem Einbau der Durchführung 1 in die Wand 2 ist jedes der Doppelkupplungsstücke 4 mittels der beiden Frontplatten 5a, b noch zu beiden Seiten der Wand 2 hin abgedeckt. Dazu ist in jedem der Kanäle 6, und zwar jeweils im Doppelkupplungsstück-freien Abschnitt 6aa, 6ba, jeweils ein Verschlussdeckel 7 angeordnet. Die Verschlussdeckel 7 schützen die Doppelkupplungsstücke 4 vor und bei der Montage und verschließen die Kanäle 6 dichtend. Es muss also die Durchführung 1 dann auch nicht sofort mit einer ihrer Anzahl an Doppelkupplungsstücken 4 entsprechenden Anzahl an Leitungen belegt werden, sondern ist auch eine Teilbelegung möglich. Die Verschlussdeckel 7 verbleiben bei den nicht belegten Doppelkupplungsstücken 4 als einen Wassereintritt hindernde Blindverschlüsse.

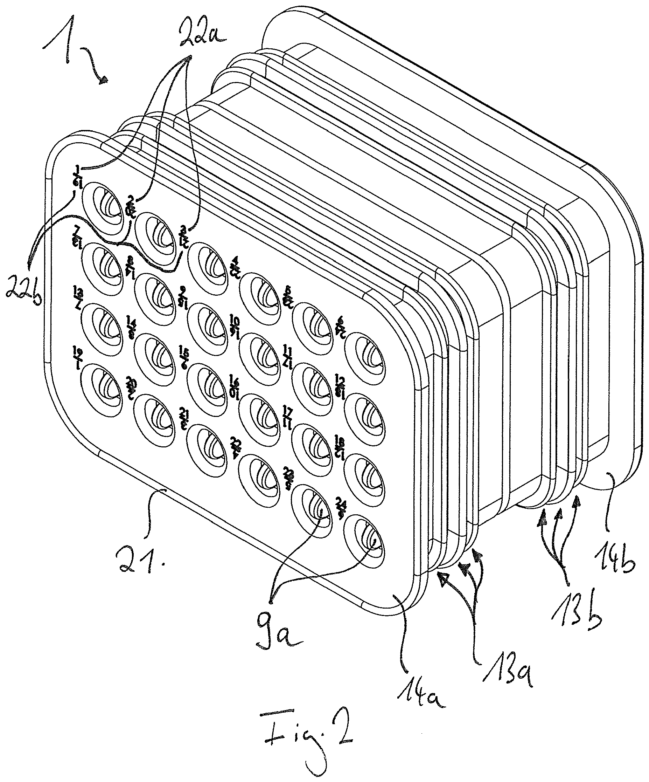

Um das Austrennen der Verschlussdeckel 7 zu erleichtern, sind die Verschlussdeckel 7 jeweils über eine Materialbrücke 8 verringerter Dicke mit der übrigen Frontplatte 5 verbunden. Mit der Materialbrücke 8 ist eine Solltrennstelle vorgegeben. Ferner ist zur Vereinfachung des Heraustrennens jeder der Verschlussdeckel 7 an seiner jeweils dem jeweiligen Doppelkupplungsstück 4 entgegengesetzten, also außen liegenden Seite mit einem Greifabschnitt 9 versehen. In Fig. 1 sind die Greifabschnitte 9 auch geschnitten; Fig. 2 lässt in der Schrägansicht ihre Erstreckung (senkrecht zur Zeichenebene in Fig. 1) besser erkennen. Die Greifabschnitte 9 stellen jeweils einen sich von dem jeweiligen Verschlussdeckel 7 weg erhebenden Steg dar, der gut mit einer Zange gegriffen werden kann.

Jedes der Doppelkupplungsstücke 4 weist an seinen beiden Enden jeweils ein Steckfitting 10 auf, in welches nach dem Entfernen des jeweiligen Verschlussdeckels 7 von der jeweiligen Seite der Wand 2 her ein Hohlrohr eingeschoben werden kann. Das Hohlrohr ist dann gegen das Steckfitting 10 gedichtet und aufgrund einer Arretierung zugleich auszugssicher darin gehalten. Um beim Einschieben einem Verschmutzungseintrag vorzubeugen, der bspw. die Dichtfunktion beeinträchtigen könnte, ist in den Doppelkupplungsstück-freien Abschnitten 6aa, 6ba der Kanäle 6 jeweils ein sich gegenüber der übrigen Kanalinnenwand 11 nach innen weg erhebender, umlaufender Steg 12 als Abstreifer vorgesehen. Dieser streift beim Einschieben des Hohlrohres an dessen Außenwand haftende Verschmutzungen ab.

Außenseitig an jeder der beiden Frontplatten 5 sind ferner jeweils drei Stegdichtungen 13 vorgesehen, und zwar jeweils vollständig umlaufend. Diese Stegdichtungen 13 blockieren bzw. verlängern Kriechwege für Feuchtigkeit entlang der Außenseite der Durchführung 1 von einer Seite der Wand 2 zur anderen.

Ebenfalls vollständig umlaufend ist je Frontplatte 5 ferner ein Flansch 14 vorgesehen, der im eingebauten Zustand der Durchführung 1 jeweils bündig mit der jeweiligen Seitenfläche 3 der Wand 2 liegt. Beim Einbau der Durchführung 1 dient der Flansch 14 einer Befestigung der Durchführung 1 an der Schalung, werden also die entgegengesetzt angeordneten Flansche 14a, b an einander gegenüberliegenden Schalungselementen befestigt.

Fig. 2 zeigt die Durchführung 1 vor dem Einbau in die Wand 2 in einer Schrägansicht. Generell bezeichnen im Rahmen dieser Offenbarung dieselben Bezugszeichen dieselben Teile und wird insoweit jeweils auch auf die Beschreibung zu den anderen Figuren verwiesen.

In der Schrägansicht ist an der Frontplatte 14a eine sich gegenüber der übrigen Durchführung 1 nach außen weg erhebende, umlaufende Erhebung 21 zu erkennen (diese Erhebung ist auch im Schnitt in Fig. 1 zu erkennen), welche an der Schalung eine näherungsweise linienförmige Anlage findet. Wird der Flansch 14 an der Schalung befestigt, wird die Erhebung 21 mit erhöhtem Druck angepresst, was einem Eintritt von Beton zwischen Frontplatte und Schalung vorbeugt.

In der Schrägansicht gemäß Fig. 2 ist an der Frontplatte 5 ferner eine den Kanälen 6 und damit den Doppelkupplungsstücken 4 zugeordnete Nummerierung zu erkennen. Die Nummerierung ist dabei zweifach als eine erste Zahlenfolge 22a und eine zweite Zahlenfolge 22b vorgesehen, es sind also jedem Doppelkupplungsstück 4 zwei Zahlen zugeordnet. Der Grund hierfür ist, dass die Frontplatte 5 durch Pressen in eine Form hergestellt wird, wobei die Nummerierung 22 bereits in der Form berücksichtigt ist. Damit nun die beiden dann entgegengesetzt zueinander angeordneten Frontplatten 5 mit demselben Formwerkzeug hergestellt werden können, ist die zweifache Nummerierung vorgesehen. Bei der zusammengesetzten Durchführung 1 ist dann jedem Doppelkupplungsstück 4 mit der ersten Nummernfolge 22a auf der einen Frontplatte 5a dieselbe Nummer zugeordnet wie an der entgegengesetzten Frontplatte 5b mit der zweiten Nummernfolge 22b.

Fig. 3 zeigt nochmals eine Frontplatte 5a in einer geschnittenen Seitenansicht, und zwar allein die Frontplatte 5a ohne Doppelkupplungsstücke 4. Dies lässt die Innenkontur der Abschnitte der Kanäle 6 erkennen, in welche bei der zusammengesetzten Durchführung 1 die Doppelkupplungsstücke 4 eingeschoben sind. Die Kanalinnenwand 11a ist in diesem Abschnitt nämlich mit mehreren, nach innen hervortretenden Erhebungen 31a geformt, die zu einer (in Fig. 1 nicht ersichtlichen) Außenkontur des jeweiligen Doppelkupplungsstücks 4 komplementär sind. Beim Einschieben eines Doppelkupplungsstücks 4 ist so ein etwas erhöhter Kraftaufwand erforderlich, das Doppelkupplungsstück 4 ist dann jedoch in seiner endgültigen Position aufgrund der Erhebungen 31a mit einer Hinterschneidung sicher in dem jeweiligen Kanal 6 gehalten.

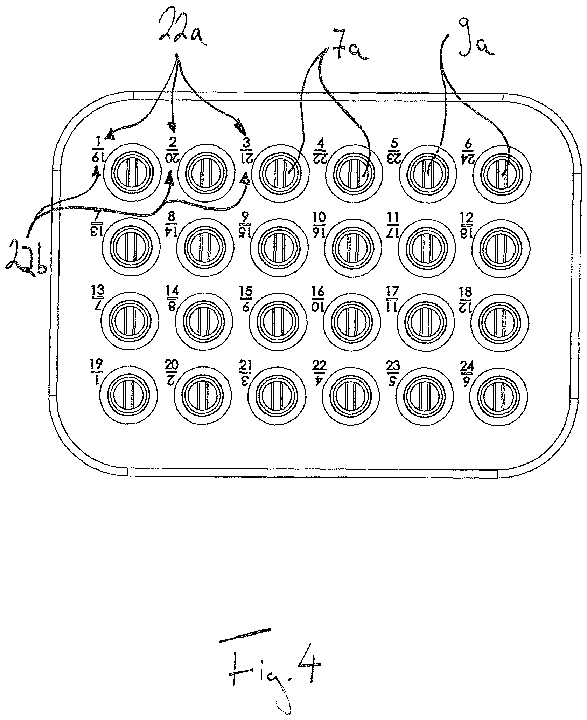

Fig. 4 zeigt die Frontplatte in einer Aufsicht, so wie sie dann von einer Seite der Wand aus nach dem Einbetonieren sichtbar ist. Zum einen sind die Verschlussdeckel 7a mit den jeweiligen Greifabschnitten 9a zu erkennen. Andererseits ist in dieser Aufsicht auch die Nummerierung 22 ersichtlich, also die erste 22a und die zweite Nummernfolge 22b, mit welchen den Doppelkupplungsstücken 4 jeweils zwei Nummern zugeordnet sind (weswegen eine baugleiche Frontplatte gespiegelt und gedreht an der entgegengesetzten Seite montiert werden kann).

## Patentansprüche

1. Durchführung (1) zum Einbau in ein Wand- oder Bodenelement (2) durch Vergießen mit Beton in einer Schalung und zum anschließend Montieren mehrerer Hohlrohre als Leitungen, mit
einer Mehrzahl Doppelkupplungsstücken (4), über welche jeweils zwei Leitungsenden miteinander verbindbar sind, und
einer für sich einstückigen Frontplatte (5) zur Anlage an der Schalung,
in welcher Frontplatte (5) an einer der zur Anlage an der Schalung vorgesehenen Seite entgegengesetzten Seite eine Mehrzahl Kanäle (6) vorgesehen sind,
wobei die Doppelkupplungsstücke (4) jeweils in einem der Kanäle (6) in der Frontplatte (5) gehalten sind, sodass nach dem Einbau der Durchführung (1) je Doppelkupplungsstück (4) und Leitung ein Leitungsende durch die Frontplatte (5) an dem Doppelkupplungsstück (4) montiert werden kann und ein Leitungsende von der entgegengesetzten Seite her an dem Doppelkupplungsstück (4) montiert werden kann,
wobei die Doppelkupplungsstücke (4) jeweils genau zwei Anschlussstellen für die Leitungsenden zur Verfügung stellen,
und wobei die Anschlussstellen der Doppelkupplungsstücke (4) Steckfittinge (10) sind,
**dadurch gekennzeichnet, dass**
die Steckfittinge (10) mit Arretierung vorgesehen sind, bei welchen jeweils die zum Einschieben des jeweiligen Leitungsendes notwendige Kraft also geringer als die zum Ausziehen notwendige Kraft ist.

2. Durchführung (1) nach Anspruch 1, bei welcher die Frontplatte (5) und die Doppelkupplungsstücke (4) mehrstückig zueinander sind.

3. Durchführung (1) nach Anspruch 2, bei welcher die Doppelkupplungsstücke (4) jeweils in ihren jeweilig zugeordneten Kanal (6) eingeschoben und vorzugsweise mit einer Hinterschneidung (31) darin gehalten sind.

4. Durchführung (1) nach einem der vorstehenden Ansprüche, bei welcher die Kanäle (6) jeweils mit einem einstückig mit der übrigen Frontplatte (5) ausgebildeten, vorzugsweise über eine Materialbrücke (8) verringerter Dicke damit verbundenen Verschlussdeckel (7) verschlossen sind, welcher das jeweilige Doppelkupplungsstück (4) zu der zur Anlage an der Schalung vorgesehen Seite der Frontplatte (5) hin abdeckt.

5. Durchführung (1) nach Anspruch 4, bei welcher die Verschlussdeckel (7) jeweils an ihrer dem jeweiligen Doppelkupplungsstück (4) entgegengesetzten Seite mit einem sich von dem übrigen Verschlussdeckel (7) weg erhebenden Greifabschnitt (9) versehen sind, an welchem der jeweilige Verschlussdeckel (7) zum Herauslösen gegriffen werden kann.

6. Durchführung (1) nach einem der vorstehenden Ansprüche, bei welcher sich die Kanäle (6) in der Frontplatte (5) jeweils über die Doppelkupplungsstücke (4) hinaus erstrecken, also jeder Kanal (6) einen Doppelkupplungsstück-freien Abschnitt (6aa, ba) zwischen dem jeweilig zugeordneten Doppelkupplungsstück (4) und der zur Anlage an der Schalung vorgesehenen Seite der Frontplatte (5) hat.

7. Durchführung (1) nach Anspruch 6, bei welcher in den Doppelkupplungsstück-freien Abschnitten (6aa, ba) der Kanäle (6) jeweils ein sich von der übrigen Kanalinnenwand (11) nach innen weg erhebender, vorzugsweise umlaufender Steg (12) als Abstreifer zum Reinigen des jeweiligen durch die Frontplatte (5) in das jeweilige Doppelkupplungsstück (4) eingeschobenen Leitungsendes vorgesehen ist.

8. Durchführung (1) nach Anspruch 6 oder 7, bei welcher in den Doppelkupplungsstück-freien Abschnitten (6aa, ba) der Kanäle (6) jeweils der Kanaldurchmesser von der zur Anlage an der Schalung vorgesehenen Seite der Frontplatte (5) zu dem jeweiligen Doppelkupplungsstück (4) hin abnimmt.

9. Durchführung (1) nach einem der vorstehenden Ansprüche, bei welcher außenseitig an der Frontplatte (5), zu der zur Anlage an der Schalung vorgesehenen Seite der Frontplatte (5) beabstandet eine Stegdichtung (13) vorgesehen ist, vorzugsweise vollständig umlaufend.

10. Durchführung (1) nach einem der vorstehenden Ansprüche mit einer zweiten für sich einstückigen Frontplatte (5b) mit einer Mehrzahl Kanäle (6b) darin, welche zweite Frontplatte (5b) der ersten Frontplatte (5a) entgegengesetzt angeordnet ist, wobei die Doppelkupplungsstücke (4) zusätzlich in jeweils einem der Kanäle (6b) in der zweiten Frontplatte (5b) gehalten sind, sodass jeweils das in entgegengesetzter Richtung in das Doppelkupplungsstück (4) eingeschobene Leitungsende durch die zweite Frontplatte (5b) eingeschoben werden kann.

11. Durchführung (1) nach einem der vorstehenden Ansprüche, bei welcher an der zur Anlage an der Schalung vorgesehenen Seite der Frontplatte (5) eine Nummerierung (22) zur Kennzeichnung der Doppelkupplungsstücke (4) vorgesehen ist.

12. Durchführung (1) nach den Ansprüchen 10 und 11, bei welcher an jeder der beiden Frontplatten (5) dieselbe Nummerierung (22) vorgesehen ist, die Nummerierung jedoch jeweils zweifach als eine erste Nummernfolge (22a) und eine zweite Nummernfolge (22b) derart vorgesehen ist, dass bei der Anordnung der Frontplatten (5) zueinander entgegengesetzt mit der ersten Nummernfolge (22a) der ersten Frontplatte (5a) den Doppelkupplungsstücken (4) jeweils dieselbe Nummer zugeordnet ist wie mit der zweiten Nummernfolge (22b) der zweiten Frontplatte (5b).

13. Wand- oder Bodenelement aus Beton mit einer Durchführung (1) nach einem der vorstehenden Ansprüche, die darin vergossen ist und an der von beiden Seiten des Wand- oder Bodenelements (2) aus je Leitung jeweils ein Leitungsende montierbar ist.

14. Verfahren zum Herstellen einer Durchführung (1) nach Anspruch 2, optional nach Anspruch 2 in Verbindung mit einem weiteren der Ansprüche 3 bis 12, mit den Schritten:
- Vorsehen eines Kunststoffmaterials;
- Herstellen der Frontplatte (5) durch Einbringen des Kunststoffmaterials in eine Form, welche nach einer zumindest teilweisen Verfestigung des Kunststoffmaterials die Frontplatte (5) freigibt;
- Vorsehen und Einsetzen der Doppelkupplungsstücke (4) in die Kanäle (6) in der Frontplatte (5), vorzugsweise durch Einschieben.

15. Verwendung einer Durchführung (1) nach einem der Ansprüche 1 bis 11 zum Einbau in ein Wand- oder Bodenelement (2) durch Vergießen mit Beton in einer Schalung und zum anschließend Montieren mehrerer Leitungen, wobei je Leitung ein Leitungsende durch die Frontplatte (5) in eines der Doppelkupplungsstücke (4) eingeschoben wird und ein Leitungsende in entgegengesetzter Richtung in das Doppelkupplungsstück (4) eingeschoben wird.

## Claims

1. A duct (1) for an integration into a wall or floor element (2) by casting with concrete in a formwork and for a subsequent mounting of a plurality of hollow tubes as lines, having
a plurality of double coupling parts (4) by which two line ends can be connected with each other, and
a front plate (5) integral as such for contacting said formwork,
in said front plate (5) a plurality of channels (6) provided at a side opposite to the side provided for contacting said formwork,
wherein said double coupling parts (4) are respectively held in one of said channels (6) in said front plate (5) so that, after said integration of said duct, for each double coupling part (4) and each line one line end can be mounted through said front plate (5) at said double coupling part (4) and one line end can be mounted from said opposite side at said double coupling part (4),
wherein said double coupling parts (4) respectively provide exactly two connecting locations for said line ends,
and wherein said connecting locations of said double coupling parts (4) are plug-in fittings (10),
**characterized in that**
said plug-in fittings (10) are provided with a locking, so that respectively the force for pushing in the respective line end is smaller than the force required for pulling it out.

2. The duct (1) according to claim 1, wherein said front plate (5) and said double coupling parts (4) are multi-piece with respect to each other.

3. The duct (1) according to claim 2, wherein said double coupling parts (4) are respectively pushed into the respectively assigned channel (6) and are preferably held by an undercut therein.

4. The duct (1) according to one of the preceding claims, wherein said channels (6) are respectively closed by a closure lid (7) integral with the remaining front plate (5) and preferably connected thereto by a material bridge (8) having a reduced thickness, said closure lid covering the respective double coupling part (4) towards said side of said front plate (5) provided for contacting said formwork.

5. The duct (1) according to claim 4, wherein said closure lids (7) are respectively provided with a grabbing section (9) projecting from the remaining closure lid (7) at its side lying opposite to the respective double coupling part (4), wherein the respective grabbing section can be grabbed for a removal of the respective closure lid (7).

6. The duct (1) according to one of the preceding claims, wherein said channels (6) in said front plate (5) respectively extend beyond said double coupling parts (4), each channel (5) having a double coupling part-free section (6aa, ba) between the respectively assigned double coupling part (4) and said side of said front plate (5) which is provided for contacting said formwork.

7. The duct (1) according to claim 6, wherein, in said double coupling part-free sections (6aa, ba) of said channels (6), respectively a projection (12) projecting from the remaining channel inner wall (11) inwards and extending preferably circumferentially is provided as a wiper cleaning the respective line end pushed through said front plate (5) into the respective double coupling part (4).

8. The duct (1) according to claim 6 or 7, wherein, in said double coupling part-free sections (6aa, ba) of said channels (6), a channel diameter is respectively decreasing from said side of said front plate (5) provided for contacting said formwork towards the respective double coupling part (4).

9. The duct (1) according to one of the preceding claims, wherein on the outside of said front plate (5), spaced to said side of said front plate (5) provided for contacting said formwork, a sealing projection (13) is provided, preferably over the whole circumference.

10. The duct (1) according to one of the preceding claims, having a second front plate (5b) being integral as such and having a plurality of channels (6b) therein, said second front plate (5b) being arranged opposite to the first front plate (5a), wherein said double coupling parts (4) are additionally held in respectively one of said channels (6b) in said second front plate (5b) so that respectively the line end pushed into the respective double coupling part (4) in said opposite direction can be pushed in through said second front plate (5b).

11. The duct (1) according to one of the preceding claims, wherein a numbering (22) for marking said double coupling parts (4) is provided at said side of said front plate (5) provided for contacting said formwork.

12. The duct (1) according to claims 10 and 11, wherein at each of said two front plates (5) the same numbering (22) is provided, said numbering being respectively provided twice as a first series of numbers (22a) and a second series of numbers (22b) in such a way that by arranging said front plates (5) opposite to each other with said first series of numbers (22a) of said first front plate (5a) respectively the same number is assigned to said double coupling parts (4) as with said second series of numbers (22b) of said second front plate (5b).

13. Wall or floor element made of concrete, having a duct (1) according to one of the preceding claims, which is casted therein, wherein from both sides of said wall or floor element (2) respectively one line end can be mounted for each line.

14. A method for manufacturing a duct (1) according to claim 2, optionally according to claim 2 in combination with a further one of claims 3 to 12, comprising the steps:
- providing a synthetic material;
- manufacturing said front plate (5) by feeding said synthetic material into a mould which releases said front plate (5) after said synthetic material having hardened at least partially;
- providing and inserting said double coupling parts (4) into said channels (6) in said front plate (5), preferably by pushing in.

15. Use of a duct (1) according to one of claims 1 to 11 for an integration into a wall or floor element (2) by casting with concrete in a formwork and for a subsequent mounting of a plurality of lines, wherein for each line one line end is pushed through said front plate (5) into one of that double coupling parts (4) and one line end is pushed into said double coupling part (4) from said opposite direction.

## Revendications

1. Passage (1) destiné à être encastré dans un élément de paroi ou de sol (2) par coulage de béton dans un coffrage et destiné à l'installation subséquente de plusieurs tuyaux creux formant des conduites, comportant:
une pluralité de coupleurs doubles (4) permettant chacun de raccorder l'une à l'autre deux extrémités de conduite, et
une plaque frontale (5) formée d'un seul tenant et destinée à reposer contre le coffrage;
laquelle plaque frontale (5) est pourvue d'une pluralité de canaux (6) sur une face opposée à la face prévue pour reposer contre le coffrage;
les coupleurs doubles (4) étant chacun maintenus dans l'un des canaux (6) de la plaque frontale (5) de manière que, suite à l'encastrement du passage (1), pour chaque coupleur double (4) et conduite, une extrémité de conduite puisse être installée dans le coupleur double (4) à travers la plaque frontale (5) et une extrémité de conduite puisse être installée depuis le côté opposé dans le coupleur double (4),
les coupleurs doubles (4) fournissant chacun exactement deux points de connexion pour les extrémités de conduite,
et les points de connexion des coupleurs doubles (4) consistant en des raccords à emboîtement (10),
**caractérisé en ce que**
les raccords à emboîtement (10) sont pourvus d'un système de blocage moyennant lequel la force nécessaire pour l'enchâssement de chacune des extrémités de conduite est moins importante que la force nécessaire pour leur retrait.

2. Passage (1) selon la revendication 1, dans lequel la plaque frontale (5) et les coupleurs doubles (4) ne sont pas constitués d'un seul tenant.

3. Passage (1) selon la revendication 2, dans lequel les coupleurs doubles (4) sont chacun enchâssés dans leur canal (6) associé et y sont retenus de préférence par une contre-dépouille (31).

4. Passage (1) selon l'une des revendications précédentes, dans lequel les canaux (6) sont chacun bouchés par un obturateur (7) conçu d'un seul tenant avec le reste de la plaque frontale (5) en étant relié à celle-ci de préférence par le biais d'un pont de matière (8) de moindre épaisseur, lequel obturateur couvre un coupleur double (4) respectif vers la face de la plaque frontale (5) prévue pour reposer contre le coffrage.

5. Passage (1) selon la revendication 4, dans lequel les obturateurs (7) sont chacun pourvus, sur leur face opposée au coupleur double (4) respectif, d'une partie de préhension (9) faisant saillie du reste de l'obturateur (7), par laquelle chacun des obturateurs (7) peut être saisi afin de l'enlever.

6. Passage (1) selon l'une des revendications précédentes, dans lequel les canaux (6) présents dans plaque frontale (5) se prolongent chacun au-delà des coupleurs doubles (4), c'est-à-dire que chaque canal (6) présente une section libre de coupleur double (6aa, ba) entre le coupleur double (4) respectivement associé et la face de la plaque frontale (5) prévue pour reposer contre le coffrage.

7. Passage (1) selon la revendication 6, dans lequel il est prévu, dans chaque section libre de coupleur double (6aa, ba) des canaux (6), un gradin (12), de préférence circonférentiel, faisant saillie vers l'intérieur à partir du reste de la paroi intérieure de canal (11) et servant de racloir pour le nettoyage de chaque extrémité de conduite enchâssée à travers la plaque frontale (5) dans son coupleur double (4) respectif.

8. Passage (1) selon la revendication 6 ou 7, dans lequel, dans chaque section libre de coupleur double (6aa, ba) des canaux (6), le diamètre du canal diminue depuis la face de la plaque frontale (5) prévue pour reposer contre le coffrage jusqu'au coupleur double (4) respectif.

9. Passage (1) selon l'une des revendications précédentes, dans lequel il est prévu un joint à lèvres (13), de préférence totalement circonférentiel, sur l'extérieur de la plaque frontale (5) à une certaine distance de la face de la plaque frontale (5) prévue pour reposer contre le coffrage.

10. Passage (1) selon l'une des revendications précédentes comportant une deuxième plaque frontale (5b) formée d'un seul tenant et pourvue d'une pluralité de canaux (6b), laquelle deuxième plaque frontale (5b) est disposée à l'opposé de la première plaque frontale (5a), les coupleurs doubles (4) étant en outre retenus dans chacun des canaux (6b) de la deuxième plaque frontale (5b), si bien que chaque extrémité de conduite enchâssée dans la direction opposée dans le coupleur double (4) peut être enchâssée à travers la deuxième plaque frontale (5b).

11. Passage (1) selon l'une des revendications précédentes, dans lequel il est prévu, sur la face de la plaque frontale (5) prévue pour reposer contre le coffrage, une numérotation (22) permettant d'identifier les coupleurs doubles (4).

12. Passage (1) selon les revendications 10 et 11, dans lequel il est prévu la même numérotation (22) sur chacune des deux plaques frontales (5), chacune de ces numérotations étant toutefois prévue sous forme double avec une première suite de numéros (22a) et une deuxième suite de numéros (22b) de manière que, avec une disposition des plaques frontales (5) en opposition l'une à l'autre, il est attribué aux coupleurs doubles (4), pourvus de la première suite de numéros (22a) de la première plaque frontale (5a), les numéros correspondants de la deuxième suite de numéros (22b) de la deuxième plaque frontale (5b).

13. Élément de paroi ou de sol en béton présentant un passage (1) selon l'une des revendications précédentes qui y est encastré par coulage et sur lequel passage, pour chaque conduite, une extrémité de conduite peut être installée depuis les deux côtés de l'élément de paroi ou de sol (2).

14. Procédé de production d'un passage (1) selon la revendication 2, éventuellement selon la revendication 2 en conjonction avec une autre revendication parmi les revendications 3 à 12, comportant les étapes consistant à:
- prévoir une matière plastique;
- produire la plaque frontale (5) par introduction de la matière plastique dans un moule duquel on retire la plaque frontale (5) après un durcissement au moins partiel de la matière plastique;
- prévoir et installer les coupleurs doubles (4) dans les canaux (6) de la plaque frontale (5), de préférence par enchâssement.

15. Utilisation d'un passage (1) selon l'une des revendications 1 à 11 destiné à être encastré dans un élément de paroi ou de sol (2) par coulage de béton dans un coffrage et destiné à l'installation subséquente de plusieurs conduites, dans laquelle, pour chaque conduite, une extrémité de conduite est enchâssée à travers la plaque frontale (5) dans l'un des coupleurs doubles (4) et une extrémité de conduite est enchâssée, dans la direction opposée, dans le coupleur double (4).
